(19) Europäisches Patentamt
European Patent Office
Office européen des brevets

(11) **EP 2 504 676 B1**

(12) **FASCICULE DE BREVET EUROPEEN**

(45) Date de publication et mention
de la délivrance du brevet:
**23.12.2015 Bulletin 2015/52**

(21) Numéro de dépôt: **10778678.2**

(22) Date de dépôt: **22.11.2010**

(51) Int Cl.:
*G01L 1/10* ^(2006.01)     *G01L 1/16* ^(2006.01)
*G01L 1/18* ^(2006.01)     *G01L 9/00* ^(2006.01)
*G01G 3/13* ^(2006.01)     *G01G 3/16* ^(2006.01)

(86) Numéro de dépôt international:
**PCT/EP2010/067941**

(87) Numéro de publication internationale:
**WO 2011/061334 (26.05.2011 Gazette 2011/21)**

(54) **CAPTEUR DE FORCE RESONANT SENSIBLE A DES MICRO-FORCES**

AUF MIKROKRÄFTE EMPFINDLICH REAGIERENDER RESONANTER KRAFTSENSOR

RESONATING FORCE SENSOR SENSITIVE TO MICRO-FORCES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.11.2009 FR 0958254**

(43) Date de publication de la demande:
**03.10.2012 Bulletin 2012/40**

(73) Titulaire: **Commissariat à l'Énergie Atomique
et aux Énergies Alternatives
75015 Paris (FR)**

(72) Inventeurs:
• **BOUKALLEL, Mehdi**
  **F-92260 FONTENAY AUX ROSES (FR)**
• **GROSSARD, Mathieu**
  **F-92120 Montrouge (FR)**

(74) Mandataire: **Ilgart, Jean-Christophe et al
BREVALEX
95, rue d'Amsterdam
75378 Paris Cedex 8 (FR)**

(56) Documents cités:
**US-A1- 2002 157 477     US-B1- 6 450 032**

• HAYASHI T ET AL: "Evaluation of tuning fork type
force transducer for use as a transfer standard",
MEASUREMENT, INSTITUTE OF
MEASUREMENT AND CONTROL. LONDON, GB
LNKD- DOI:10.1016/J.MEASUREMENT.
2008.01.002, vol. 41, no. 9, 1 novembre 2008
(2008-11-01), pages 941-949, XP025716358, ISSN:
0263-2241 [extrait le 2008-01-12] cité dans la
demande
• BAHADUR I B ET AL: "Design of a MEMS-based
resonant force sensor for complaint, passive
microgripping", MECHATRONICS AND
AUTOMATION, 2005 IEEE INTERNATIONAL
CONFERENCE NIAGARA FALLS, ON, CANADA
JULY 29-AUG 1, 2005, PISCATAWAY, NJ, USA,
IEEE, vol. 1, 29 juillet 2005 (2005-07-29), pages
77-82, XP010912995, ISBN: 978-0-7803-9044-7
cité dans la demande

# Description

## DOMAINE TECHNIQUE

La présente invention concerne un capteur de force résonant sensible à des micro-forces.

Un capteur de force est un dispositif qui allie à la fois l'électronique et la mécanique. Il permet de convertir une force, c'est-à-dire une grandeur physique vectorielle en une grandeur électrique. Un capteur de force résonant est destiné à être mis en vibration à la résonance lorsqu'il est utilisé.

Par l'appellation capteur sensible à des micro-forces, nous entendons un capteur de force sensible à des valeurs de forces allant d'une dizaine de micro newtons à un ou plusieurs milli newtons.

## ÉTAT DE LA TECHNIQUE ANTÉRIEURE

Un capteur de force comporte généralement un corps d'épreuve dont les dimensions ont été choisies en fonction des forces à mesurer et qui est équipé d'éléments de mesure qui sont judicieusement répartis sur le corps d'épreuve. Le corps d'épreuve est un élément mécanique qui réagit sélectivement à la force à mesurer appelée aussi mesurande. Il transforme la force à mesurer en une grandeur physique qui est ici une déformation.

Les éléments de mesure sont des éléments sensibles liés au corps d'épreuve, ce sont dans ce cas des capteurs de déformation. Ils traduisent les réactions du corps d'épreuve en une grandeur électrique constituant le signal de sortie.

Dans l'art antérieur, les capteurs aptes à mesurer des forces comprises dans la gamme citée ci-dessous ont des corps d'épreuve très compacts et une raideur très faible car la force et la raideur sont des grandeurs corrélées.

Deux catégories existent, soit le corps d'épreuve intègre les éléments de mesure, soit le corps d'épreuve est associé à une instrumentation extérieure.

Dans la première catégorie, on utilise généralement comme éléments de mesure des capteurs de déformation capacitifs ou piézorésistifs. Le document référencé [1] en fin de description illustre un capteur de force basé sur un principe électrostatique. Pour l'approche piézorésistive, on peut se référer au document [2] dont les références complètes se trouvent en fin de description. Ce document [2] montre un corps d'épreuve avec une base reliée à une poutre en porte à faux, équipé de jauges piézorésistives dont au moins une se trouve au niveau de l'encastrement entre la poutre et la base.

Dans la seconde catégorie, on utilise généralement une instrumentation sans contact avec le corps d'épreuve pour déterminer sa déformation. L'instrumentation est généralement basée sur l'interférométrie, la télémétrie, ou la mesure capacitive. Un exemple de ce type de capteur de force est donné par le microscope à force atomique illustré par exemple dans les documents [3] et [4] dont les références complètes se trouvent en fin de description. Une pointe est portée par un levier relativement souple et réfléchissant, il est ancré sur un corps d'épreuve. La pointe est mise en contact avec l'objet à analyser ou est mise en oscillation à proximité de l'objet à analyser. Un rayon laser de faible puissance se réfléchit sur le levier. Si le rayon laser dévie, c'est que le levier s'est infléchi (dans un sens ou dans l'autre), la déviation est donc révélatrice des forces d'interaction entre la pointe et la surface de l'objet à analyser. La mesure de la déviation de la pointe passe donc par celle de la position du faisceau laser réfléchi, ce qui s'effectue au moyen d'un photorécepteur par exemple un quadrant de photodiodes.

L'inconvénient des capteurs de seconde catégorie est qu'ils sont encombrants et qu'ils ne peuvent être utilisés que dans certaines applications où l'encombrement n'a pas d'importance. En revanche, les mesures peuvent se faire avec une grande précision.

L'inconvénient des capteurs de la première catégorie est qu'il est très difficile d'intégrer les éléments de mesure sur des corps d'épreuve très petits bien que seuls ces corps d'épreuve tous petits permettent de mesurer les forces les plus petites de la gamme donnée plus haut.

Il existe aussi des capteurs de force dits résonants, c'est à dire destiné à être excités à leur fréquence de résonance à vide. Ils utilisent comme élément de mesure des capteurs piézoélectriques.

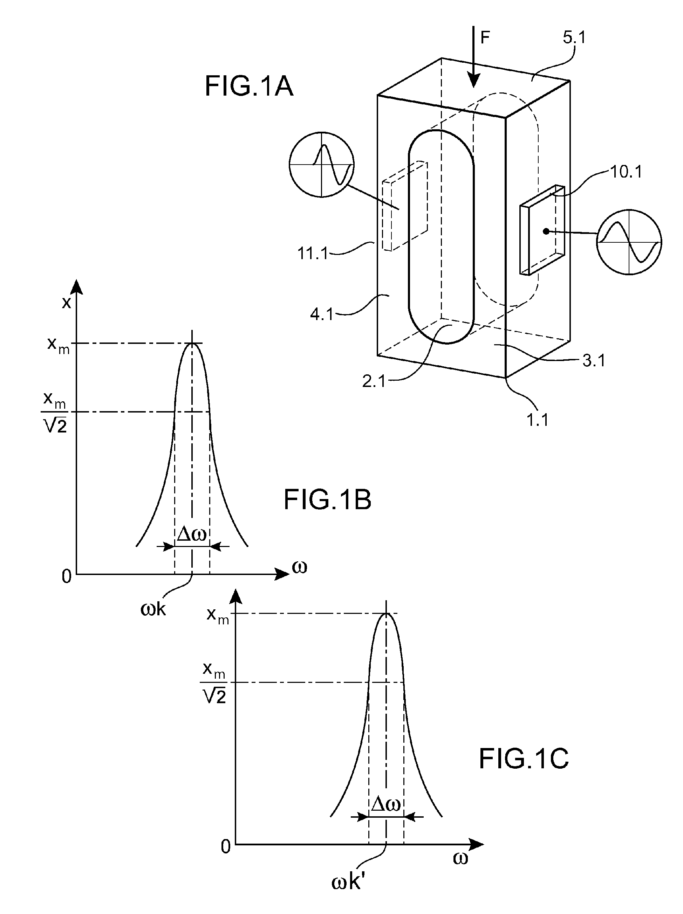

Dans ces configurations, un corps d'épreuve est mis en vibration à sa fréquence de résonance par le biais d'au moins un actionneur piézoélectrique ou un actionneur électrostatique. Lorsque l'on applique une force sur le corps d'épreuve, la fréquence de résonance du corps d'épreuve change. Au moins un élément de mesure lié au corps d'épreuve mesure la variation de fréquence de résonance et cette variation de fréquence renseigne sur le gradient de la force appliquée. Ce type de capteur de force résonant est connu pour sa grande précision de mesure. On peut se référer par exemple aux figures 1A, 1B, 1C qui illustrent le principe d'un tel capteur de force résonnant.

Sur la figure 1A, on a schématisé un exemple de corps d'épreuve 1.1, en forme de parallélépipède muni d'un évidement 2.1 délimité latéralement par deux poutres parallèles 3.1, 4.1. Le corps d'épreuve 1.1 est monolithique. Les deux poutres 3.1, 4.1 ont leurs deux extrémités encastrées dans le corps d'épreuve 1.1. Ce type de corps d'épreuve est dit à double fourchette. La force à mesurer F s'applique sur une zone effectrice 5.1 qui est une des faces du corps d'épreuve 1.1. Les poutres 3.1, 4.1 sont sollicitées en compression ou en traction. Un élément d'excitation 10.1 est fixé à l'une des poutres 3.1 pour faire vibrer le corps d'épreuve 1.1. Un élément de mesure 11.1 est fixé à l'autre poutre 4.1. La figure 1B montre l'allure de la déformation de la poutre 4.1 au niveau de l'élément de mesure 11.1, en fonction de la pulsation d'excitation ω apparaissant lors de l'activation de l'élément d'excitation 10.1 en l'absence de la force F. La pulsation de résonance est ωk. La figure 1C montre l'allure de la déformation de la poutre 4.1 au niveau de l'élément de mesure 11.1 en fonction de la pulsation d'excitation ω du corps d'épreuve 1.1 en présence de la force F. La pulsation de résonance a changé et est devenue ωk'. Les deux courbes sont décalées de Δωk. Les deux documents [5],[6] dont les références se trouvent en fin de description décrivent des capteurs de force de ce type à diapason à double extrémité (DETF soit double ended tuning fork). Le capteur évoqué dans le document [5] est quantifié pour des grandeurs de forces de l'ordre de 20kN. Le corps d'épreuve a une longueur de l'ordre de la centaine de millimètres, une largeur de l'ordre de quelques dizaines de millimètres et une épaisseur de l'ordre de la dizaine de millimètres. Ces forces ne sont donc pas des micro-forces.

Le capteur de force décrit dans le document [6] est plus compact, il est quantifié pour des grandeurs de force de l'ordre de 500 N. On n'est toujours pas dans la gamme de forces requises.

Ces capteurs de force sont monolithiques. L'approche vibratoire fait que tout le corps d'épreuve vibre. Lorsqu'il s'agit de mesurer des forces de grande amplitude, la zone effectrice peut être relativement massive et n'est pas affectée ou quasiment pas affectée par les vibrations.

Lorsque l'on cherche à mesurer des forces bien plus petites, dans la plage allant de la dizaine de micro newtons à un ou plusieurs milli newtons, le corps d'épreuve doit être beaucoup moins important, puisque la raideur du corps d'épreuve dépend de la géométrie et la force dépend de la raideur. Mais avec des dimensions beaucoup plus petites, les oscillations vont affecter la zone effectrice et les mesures risquent d'être si bruitées qu'elles ne seront pas exploitables. Le document [7] dont les références se trouvent en fin de description fait le point sur les problèmes posés par ce type de capteur de force et évoque ce problème de réduction de la vibration depuis l'actionneur jusqu'à la zone effectrice.

Dans ce contexte, voir aussi le document US6450032.

De plus, les corps d'épreuve décrits dans ces deux documents possèdent une raideur donnée fixe, ce qui signifie que selon la nature des mesures à faire, on peut être amené à changer de corps d'épreuve et qu'il faut donc disposer d'un ensemble de corps d'épreuve.

## EXPOSÉ DE L'INVENTION

La présente invention a justement comme but de proposer un capteur de force résonant possédant un corps d'épreuve, apte à mesurer avec précision des micro-forces telles que définies précédemment, sans être gêné par les vibrations liées à la résonance auquel est soumis son corps d'épreuve.

Un autre but de l'invention est de fournir un capteur de force sensible à des forces s'appliquant dans un espace à deux dimensions qui sont celles de son corps d'épreuve plan.

Encore un autre but de l'invention est de fournir un capteur de force dont le corps d'épreuve possède une raideur ajustable, ce qui évite de prévoir pour un capteur de force donné plusieurs corps d'épreuve ayant des raideurs différentes.

Un but supplémentaire de l'invention est de fournir un capteur de force doté d'un circuit électronique de traitement et de commande permettant de rendre le capteur robuste vis-à-vis de conditions environnementales potentiellement perturbantes.

Pour atteindre ces buts l'invention concerne plus précisément un capteur de force dans lequel la force à mesurer est à appliquer sur une poutre effectrice encastrée-libre dont l'extrémité libre se trouve sensiblement sur un noeud de vibration lors de la mise en vibration du corps d'épreuve.

Plus précisément, la présente invention concerne un capteur de force résonant comportant un corps d'épreuve formé d'une plaque monolithique comprenant une première zone contribuant à délimiter un premier évidement et destinée, en fonctionnement, à être maintenue en position par rapport à un support, une seconde zone contribuant à délimiter à la fois le premier évidement et un second évidement, la seconde zone étant reliée à la première zone. Une poutre de mesure s'étend en travers du premier évidement, ayant une première extrémité encastrée à la première zone et une seconde extrémité reliée mécaniquement à la seconde zone. Une poutre d'excitation s'étend au travers du second évidement, ayant ses deux extrémités encastrées à la seconde zone, elle est équipée d'au moins un élément d'excitation. Une troisième zone est reliée à la première zone et une poutre effectrice présente une extrémité libre sur laquelle la force à mesurer va s'appliquer et une extrémité encastrée à la troisième zone. Enfin, une quatrième zone relie l'extrémité encastrée de la poutre effectrice à la seconde extrémité de la poutre de mesure. Ainsi, lorsque le corps d'épreuve vibre par activation de l'élément d'excitation, en l'absence de force appliquée sur l'extrémité libre de la poutre effectrice, la poutre de mesure possède au moins un ventre de vibration et est équipée d'au moins un élément de mesure au niveau de ce ventre et l'extrémité libre de la poutre effectrice est située sensiblement sur un noeud de vibration de la poutre effectrice. Sans activation de l'élément d'excitation, en présence d'une force appliquée à l'extrémité libre de la poutre effectrice, l'élément de mesure est situé à un endroit de déformation maximale de la poutre de mesure.

Il est préférable que la première zone, la seconde zone et la troisième zone de la plaque soient pleines pour que les vibrations dues à l'excitation ne perturbent pas l'extrémité de la poutre effectrice.

Dans le même but, il est préférable que la seconde zone et la troisième zone soient reliées chacune à la première zone par une liaison mécanique ayant un comportement d'encastrement lorsque la première zone est maintenue en position par rapport au support.

Pour absorber les vibrations dues à l'excitation afin qu'elles ne se propagent pas jusqu'à l'extrémité libre de la poutre effectrice, il est préférable que la liaison mécanique entre la seconde extrémité de la poutre de mesure et la seconde zone soit une liaison pivot.

Pour que la déformation de la poutre effectrice en charge se propage bien jusqu'à la poutre de mesure, il est préférable que la quatrième zone soit moins massive que la première, la seconde et la troisième zone.

Cette quatrième zone peut être formée d'une succession de poutres reliées les unes aux autres, dont une première poutre extrême est reliée à l'extrémité encastrée de la poutre effectrice et une seconde poutre extrême est reliée à la seconde extrémité de la poutre de mesure.

Pour rigidifier le corps d'épreuve sans augmenter de manière importante sa masse, il est préférable que la succession comporte une poutre intermédiaire entre les deux poutres extrêmes, une extrémité de la poutre intermédiaire étant reliée à une extrémité de la poutre d'extrémité par une première poutre supplémentaire et l'autre extrémité de la poutre intermédiaire étant reliée à la seconde zone par l'intermédiaire d'une seconde poutre supplémentaire.

Il est avantageux notamment au point de vue de la rigidité mécanique et donc des performances métrologiques que la plaque soit en métal tel que l'aluminium.

On donnera de préférence à la plaque une épaisseur de l'ordre du millimètre, une plus grande longueur et une plus grande largeur de l'ordre de la vingtaine de millimètres.

Pour réduire la tension d'alimentation requise pour mettre en vibration le corps d'épreuve, il est préférable d'équiper la poutre d'excitation de deux éléments d'excitation en vis-à-vis sur des faces opposées de la poutre d'excitation.

Le capteur de force selon l'invention comporte en outre un circuit électronique de commande et de traitement destiné à recevoir un signal délivré par l'élément de mesure, à fournir un signal à l'élément d'excitation et ayant une sortie destinée à fournir un signal traduisant l'amplitude de la force appliquée à l'extrémité libre de la poutre effectrice et sa direction. Il est préférable qu'il comporte, de manière à posséder les propriétés de robustesses évoquées plus haut, une boucle d'asservissement pour ajuster le signal fourni à l'élément d'excitation afin qu'il ait une fréquence asservie en fonction de la différence entre la phase du signal délivré par l'élément de mesure et la phase du signal fourni à l'élément d'excitation quelle que soit la force appliquée à l'extrémité libre de la poutre effectrice.

La boucle d'asservissement peut comporter un bloc multiplieur ayant une entrée recevant le signal délivré par l'élément de mesure ayant subi éventuellement un déphasage et une autre entrée recevant un signal traduisant le signal à appliquer à l'élément d'excitation, et une sortie reliée à une entrée d'un bloc filtre passe-bas, le bloc filtre passe-bas ayant une sortie qui est d'une part la sortie destinée à fournir un signal traduisant l'intensité de la force appliquée à l'extrémité libre de la poutre effectrice, et qui d'autre part est reliée à une entrée d'un bloc oscillateur contrôlé en tension, le bloc oscillateur contrôlé en tension ayant une sortie reliée d'une part à la seconde entrée du bloc multiplieur et d'autre part à l'élément d'excitation.

Elle peut comporter en outre un bloc amplificateur pour fournir un signal de niveau convenable au bloc multiplieur, la sortie du bloc oscillateur contrôlé en tension étant reliée à une entrée du bloc amplificateur, le bloc amplificateur ayant une sortie reliée à la seconde entrée du bloc multiplieur et d'autre part à l'élément d'excitation.

Le circuit électronique de commande et de traitement comporte en outre un bloc diviseur de tension, ce bloc diviseur de tension ayant une entrée reliée à la sortie du bloc amplificateur, et une sortie reliée à l'élément d'excitation de manière à réduire le niveau du signal à appliquer à l'élément d'excitation à un niveau requis, inférieur à celui fourni par le bloc amplificateur.

Le circuit électronique de commande et de traitement comporte, en outre, un bloc déphaseur permettant d'ajuster la raideur du corps d'épreuve sans à avoir à changer de corps d'épreuve, ce bloc déphaseur ayant une sortie reliée à la première entrée du bloc multiplieur et une entrée reliée à l'élément de mesure.

Il est préférable de prévoir, en outre, dans le circuit électronique de commande et de traitement un bloc d'adaptation d'impédance ayant une entrée reliée à l'élément de mesure et une sortie reliée à l'entrée du bloc déphaseur.

**BRÈVE DESCRIPTION DES DESSINS**

La présente invention sera mieux comprise à la lecture de la description d'exemples de réalisation donnés, à titre purement indicatif et nullement limitatif, en faisant référence aux dessins annexés sur lesquels :

la figure 1A montre un capteur de force de conventionnel ne convenant pas pour mesurer des microforces ; les figures 1B, 1C montrant la déformation de la poutre de mesure en fonction de la pulsation respectivement en l'absence et en présence d'une force appliquée sur sa zone effectrice ;

la figure 2 est une vue de face du corps d'épreuve d'un exemple de capteur de force selon l'invention ;

la figure 3 est un schéma sous forme de blocs du circuit électronique de commande et de traitement du capteur selon l'invention ;

les figures 4A à 4G illustrent un exemple de circuit pour chacun des blocs de la figure 3 ;

la figure 5 est un graphique qui est la réponse spectrale du capteur de force selon l'invention ;

la figure 6 illustre les oscillations maximales mesurées pour les points de fonctionnement caractéristiques indiqués à la figure 5 ;

les figures 7A, 7B, 7C représentent la relation entre la force appliquée à la poutre effectrice dans la direction de son axe principal et le déplacement de la dite poutre effectrice.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

## EXPOSÉ DÉTAILLÉ DE MODES DE RÉALISATION PARTICULIERS

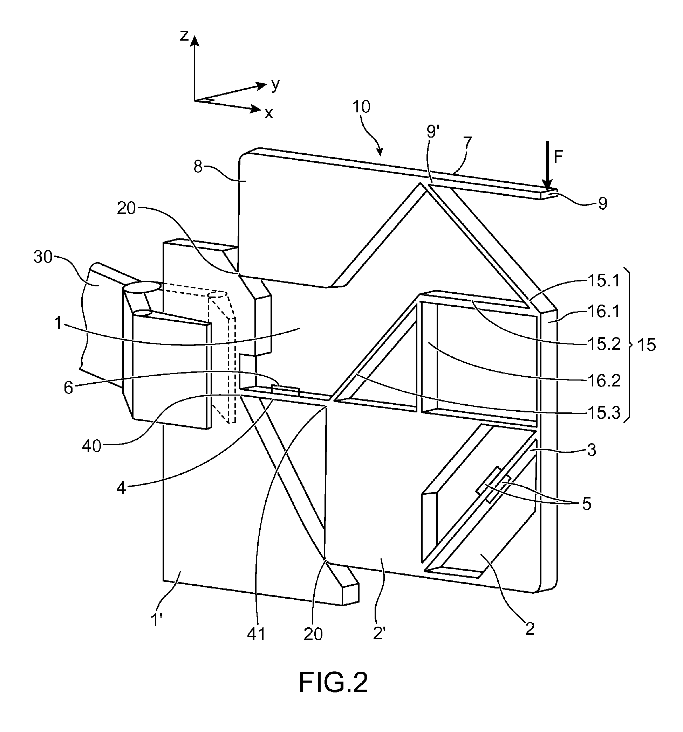

On va se référer à la figure 2 qui montre en vue de face un exemple d'un capteur de force résonant selon l'invention. Il comporte un corps d'épreuve 10 monolithique. Le corps d'épreuve 10 est réalisé à partir d'une plaque métallique, par exemple en aluminium de type T6, c'est dire de l'aluminium traité thermiquement pour être durci par mise en solution, trempé et revenu. La plaque de départ est par exemple un carré de 20 millimètres de côté, son épaisseur étant de 1 millimètre. Elle possède au moins deux évidements 1, 2. Une poutre 3, 4 se projette en travers de chacun d'entre eux, elle relie deux bords opposés de l'évidement dans lequel elle se trouve.

La plaque comporte ainsi au moins une première zone 1' contribuant à délimiter le premier évidement 1, une seconde zone 2' contribuant à délimiter à la fois le premier évidement 1 et le second évidement 2, la seconde zone 2' étant reliée à la première zone 1'. La première zone 1' est destinée à être maintenue en position par rapport à un support 30 lors de la mesure. Le support 30 peut prendre la forme d'un étau (schématisé sur la figure 2) dont les mâchoires viendraient enserrer les deux faces principales de la plaque métallique au niveau de la première zone 1'.

L'une des poutres est dite d'excitation (référence 3) et l'autre de mesure (référence 4).

La poutre d'excitation 3 peut avoir une section de 1 millimètre par 280 micromètres et une longueur de 7 millimètres et la poutre de mesure 4 peut avoir une section de 1 millimètre par 310 micromètres et une longueur de 6 millimètres.

La poutre de mesure 4 comporte une première extrémité 40 encastrée au niveau de la première zone 1' et une seconde extrémité 41 reliée mécaniquement à la seconde zone 2'. La liaison mécanique entre la seconde extrémité 41 de la poutre de mesure 4 et la seconde zone 2' est une liaison pivot lorsque la première zone 1' du corps d'épreuve est maintenu en position par rapport au support 30. Par liaison pivot, on entend une liaison qui autorise un mouvement de rotation entre la seconde extrémité 41 de la poutre de mesure 4 et la seconde zone 2'.

La poutre d'excitation 3 est équipée d'au moins un élément d'excitation 5, par exemple en matériau piézoélectrique, tel que le PZT (titano-zirconate de plomb). L'élément d'excitation 5 et la poutre d'excitation 3 qui en est équipée sont destinés à mettre en vibration le corps d'épreuve 10 de manière à le mettre en résonance.

Pour une excitation efficace et une alimentation électrique faible, il est préférable de placer deux éléments d'excitation 5 sur deux faces opposées de la poutre d'excitation 3 et en vis à vis. Sur la figure 2, les éléments d'excitation 5 sont sur les faces latérales les plus larges de la poutre d'excitation 3. On pourrait bien sûr les mettre sur les faces latérales les moins larges de la poutre d'excitation 3, mais pour un même élément d'excitation, la consommation énergétique serait plus importante pour obtenir une même déformation de la poutre d'excitation 3.

La poutre de mesure 4 est équipée d'au moins un élément de mesure 6 par exemple en matériau piézoélectrique, tel que le PZT (titano-zirconate de plomb). Cet élément de mesure 6 est destiné à mesurer la déformation de la poutre 4 sur laquelle il est monté.

Les éléments de mesure et d'excitation 6, 5 peuvent prendre la forme de pastilles et être collés sur les poutres 4, 3 avec de la colle électriquement conductrice. D'autres modes de réalisation sont possibles, ils pourraient être imprimés sur la poutre sur laquelle ils sont montés. Ils peuvent présenter une longueur de 12 millimètres, une épaisseur de 0,2 millimètre et une largeur d'un millimètre.

La plaque comporte en outre une poutre effectrice 7 qui se projette depuis une troisième zone 8 de la plaque. Cette poutre effectrice 7 possède une extrémité 9 libre et donc une autre extrémité encastrée 9' dans la troisième zone 8. Dans l'exemple décrit, la poutre effectrice peut avoir une section de 1 millimètre par 200 micromètres et une longueur de 7 millimètres. L'extrémité libre 9 de la poutre effectrice est destinée à recevoir la force à mesurer F. Cette force F vise à la déformer en flexion, en extension ou en compression. Elle peut être dirigée transversalement, selon l'axe z, ou bien selon un axe principal de la poutre effectrice, c'est-à-dire selon l'axe x, ce qui revient à dire que la direction x et la direction z forment un plan xoz qui est celui de la plaque. La troisième zone 8 est reliée à la première zone 1' par une liaison mécanique 20 ayant un comportement d'encastrement lorsque la première zone 1' est maintenue en position par rapport au support 30. Théoriquement, lorsque le corps d'épreuve est mis en résonance, le déplacement au niveau d'un encastrement est nul. Mais comme l'encastrement ne peut être parfait, la liaison mécanique peut se déplacer dans le plan xoz.

La plaque comporte en outre une quatrième zone 15 qui relie l'extrémité encastrée 9' de la poutre effectrice 7 à la seconde extrémité 41 de la poutre de mesure 4 éventuellement via la seconde zone 2'. Elle est moins massive que les première, seconde et troisième zones. La quatrième zone 15 peut comporter au moins une poutre 15.1 qui s'étend de l'extrémité encastrée 9' de la poutre effectrice 7 vers la seconde zone 2'. Pour ne pas trop alourdir le corps d'épreuve 10, la quatrième zone 15 peut être formée d'une succession de poutres 15.1, 15.2, 15.3 découpées dans la plaque, reliées les unes aux autres, dont une première extrême 15.1 est reliée à l'extrémité encastrée 9' de la poutre effectrice 7 et une seconde extrême 15.3 est reliée à la seconde extrémité 41 de la poutre de mesure 4, c'est-à-dire à la liaison pivot. Une rotation est donc autorisée entre la seconde extrémité 41 de la poutre de mesure 4 et la seconde poutre extrême 15.3.

Pour rigidifier le corps d'épreuve sans augmenter de manière importante sa masse, il est préférable que la succession de poutres 15.1, 15.2, 15.3 comporte une poutre intermédiaire 15.2 entre les deux poutres extrêmes 15.1, 15.3, une extrémité de la poutre intermédiaire 15.2 étant reliée à une extrémité de la poutre d'excitation 3 par une première poutre supplémentaire 16.1 et l'autre extrémité de la poutre intermédiaire 15.2 étant reliée à la seconde zone 2' par l'intermédiaire d'une seconde poutre supplémentaire 16.2. Toutes ces poutres sont usinées dans la plaque puisqu'elle est monolithique. Les poutres supplémentaires 16.1, 16.2, tout comme la succession de poutres 15.1, 15.2, 15.3 font partie de la quatrième zone 15, l'ensemble des poutres de la quatrième zone 15 forme un treillis. Ainsi la première poutre extrême 15.1 permet de solidariser la poutre effectrice 7 par l'intermédiaire de son extrémité encastrée 9' à la poutre d'excitation 3 et à la poutre de mesure 4. Cet agencement fait que dès qu'une force est appliquée à l'extrémité libre 9 de la poutre effectrice 7 selon l'axe x ou l'axe z, la déformation résultante est ressentie sur la poutre de mesure 4.

Ainsi, lorsque le corps d'épreuve 10 vibre par activation de l'élément d'excitation 5, en l'absence de force appliquée sur l'extrémité libre 9 de la poutre effectrice 7, la poutre de mesure 4 possède au moins un ventre de vibration au niveau duquel se trouve l'élément de mesure 6. L'extrémité libre 9 de la poutre effectrice 7 est située sensiblement sur un noeud de vibration de la poutre effectrice 7. Sans activation de l'élément d'excitation 5, en présence d'une force F appliquée à l'extrémité libre 9 de la poutre effectrice 7 selon l'axe x ou l'axe z, l'élément de mesure 6 est situé sur une zone de déformation maximale de la poutre de mesure 4.

Lorsque le corps d'épreuve 10 non sollicité au niveau de la poutre effectrice 7, est mis en vibration à l'aide de l'élément d'excitation 5 à une fréquence pour laquelle on observe le phénomène de résonance, la fréquence est une fréquence de résonance encore appelée fréquence propre du corps d'épreuve 10. Il y a plusieurs fréquences propres, la plus petite est appelée fréquence fondamentale f1 et les autres sont des multiples de la fréquence fondamentale, elles valent j.f1 avec j entier supérieur à un. Lorsque le corps d'épreuve 10 est excité au niveau de la poutre d'excitation 3 à une fréquence fj, la poutre de mesure 4 vibre et présente j ventres de vibration et j+1 noeuds de vibration. On place donc un élément de mesure 6 au niveau d'un ventre de vibration de la poutre de mesure 4.

Lorsque le corps d'épreuve 10 est mis en vibration à une de ses fréquences de résonance par le biais de l'élément d'excitation 5, sans qu'une force ne soit appliquée à la poutre effectrice 7, la poutre d'excitation 3 est soumise à des successions d'étirements et de compressions. Un signal périodique (généralement sinusoïdal) est délivré par l'élément de mesure 6, il est déphasé de n/2 par rapport au signal appliqué à la poutre d'excitation 3 par l'élément d'excitation 5. Lorsqu'une force est appliquée en outre sur l'extrémité libre 9 de la poutre effectrice 7, dirigée selon l'axe x ou selon l'axe z, la déformation engendrée par cette force appliquée au niveau de l'extrémité libre 9 de la poutre effectrice 7 se propage dans le corps d'épreuve 10 jusqu'à la poutre de mesure 4, ce qui d'une part modifie la raideur du corps d'épreuve et d'autre part occasionne un déplacement de la fréquence de résonance au niveau de la poutre de mesure 4.

Dans l'exemple décrit, la structure du corps d'épreuve 10 fait que la vibration générée par l'excitation de la poutre d'excitation 3 se propage à travers la seconde zone 2' jusqu'à la poutre de mesure 4. La seconde zone 2' est aussi reliée à la première zone 1' par une liaison mécanique 20 ayant un comportement d'encastrement lorsque la première zone 1' est maintenue en position par rapport au support 30. Ainsi la première zone 1' de la plaque se trouve alors entre la seconde zone 2' et la troisième zone 8 de la plaque, ces zones étant reliées entre elles par des liaisons mécaniques 20 ayant des comportements d'encastrement.

Par contre, à cause de la quatrième zone 15 en treillis de poutres, il n'y a pas dans le corps d'épreuve 10 de zone pleine et massive reliant directement l'une des extrémités ou l'autre de la poutre d'excitation 3 et l'extrémité encastrée 9' de la poutre effectrice 7.

Les zones 1', 2', 8 sont pleines et de surface plus importante que la quatrième zone 15, elles sont donc beaucoup plus massives que la quatrième zone 15. La déformation de la poutre effectrice 7 lors de l'application d'une force peut ainsi se transmettre en s'amplifiant à la poutre de mesure 4 via la troisième zone 8 et la première zone 1'. Ainsi de faibles sollicitations en termes de contraintes appliquées l'extrémité libre 9 de la poutre effectrice 7 se traduisent par une déformation maximale de la poutre de mesure 4.

La présence de la liaison pivot à la seconde extrémité 41 de la poutre de mesure 4 fait qu'une partie des vibrations générées par la poutre d'excitation 3 se propageant dans la seconde zone 2' et sont absorbées, ce qui empêche leur propagation jusqu'à l'extrémité libre 9 de la poutre effectrice 7.

Par contre la quatrième zone 15 en treillis de poutres permet également que la déformation de la poutre effectrice 7 apparaissant lors de l'application sur son extrémité libre 9 atteigne la poutre de mesure 4.

Puisque la plaque est monolithique et que les poutres appartiennent à la plaque, les poutres, leurs encastrements et les évidements sont obtenus par des procédés d'usinage conventionnels de la plaque.

Pour pouvoir acquérir de manière efficace et précise la force à mesurer s'appliquant sur l'extrémité libre 9 de la poutre effectrice 7, on utilise un circuit électronique de commande et de traitement 100 relié d'un côté à l'élément d'excitation 5 pour commander l'excitation de la poutre d'excitation 3 et de l'autre à l'élément de mesure 6, ce circuit électronique 100 ayant une boucle d'asservissement permettant de conserver un déphasage de n/2 entre le signal appliqué à l'élément d'excitation 5 et le signal délivré par l'élément de mesure 6 en présence de la force à mesurer et ce quelle que soit la grandeur de la force à mesurer et même si la poutre de mesure vibre à une fréquence proche de la fréquence de résonance du corps d'épreuve. Ces signaux sont périodiques et généralement sinusoïdaux.

L'asservissement agit sur les fréquences. La fréquence fe du signal délivré par l'élément de mesure 6, lorsqu'aucune force n'est appliquée à l'extrémité libre 9 de la poutre effectrice 7 est sensiblement la même que celle du signal appliqué à l'élément d'excitation 5 et référencée fs. Par contre la phase $\varphi$e du signal délivré par l'élément de mesure 6 est déphasée de n/2 par rapport à la phase $\varphi$s du signal appliqué à l'élément d'excitation. Lorsqu'une force est appliquée à l'extrémité libre de la poutre effectrice 7, la fréquence fe du signal délivré par l'élément de mesure 6 est modifiée ainsi que sa phase $\varphi$e. La boucle d'asservissement du circuit électronique de commande et de traitement 100 corrige la fréquence fs du signal appliqué à l'élément d'excitation 5 pour retrouver au niveau de l'élément de mesure 6, une nouvelle fréquence de résonance ou quasi de résonance et un déphasage de n/2 par rapport à la phase du signal appliqué à l'élément d'excitation 5 en présence de la force appliquée à l'extrémité libre 9' de la poutre effectrice 7. Ainsi grâce à l'asservissement le signal appliqué à l'élément d'excitation 5 a une fréquence asservie en fonction de la différence entre la phase $\varphi$e du signal délivré par l'élément de mesure 6 et la phase $\varphi$s du signal fourni à l'élément d'excitation 5.

La différence de phase due à la correction traduit le gradient de la force à mesurer. Son signe traduit sa direction.

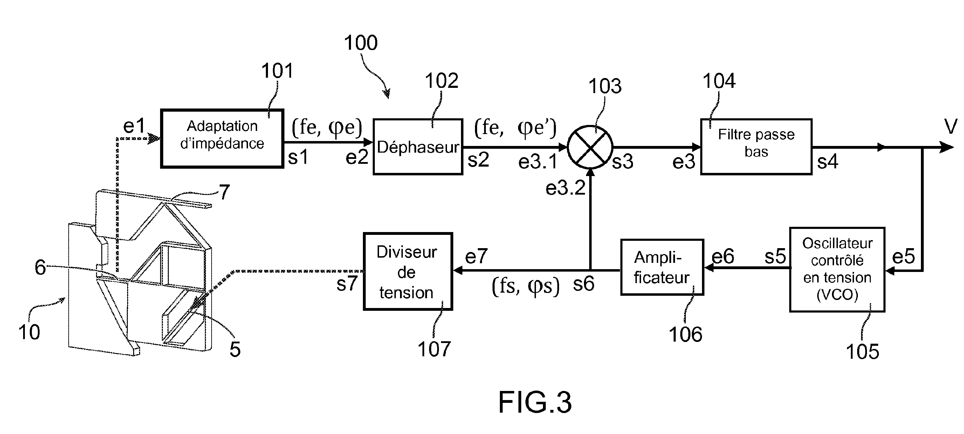

Sur la figure 3, on a représenté sous forme de blocs, les différents éléments du circuit électronique 100. Le circuit électronique 100 garantit un fonctionnement stable et fiable au cours du temps du capteur en étant pratiquement insensible aux conditions environnementales variables. On rappelle que les éléments piézoélectriques sont eux sensibles aux variations de température.

L'élément de mesure 6 est relié à une entrée e1 d'un bloc d'adaptation d'impédance 101. Ce bloc d'adaptation d'impédance 101 a pour fonction d'adapter l'impédance entre l'élément de mesure 6 et le bloc qui lui est en aval et qui est un bloc de déphaseur 102. L'impédance d'un élément de mesure 6 de type piézoélectrique est très élevée et vaut plusieurs Méga Ohms d'où l'utilité de l'adaptation d'impédance.

La sortie s1 du bloc d'adaptation d'impédance 101 est relié en entrée e2 du bloc déphaseur 102, ce bloc déphaseur 102 ayant pour fonction de réaliser un déphasage temporel entre le signal appliqué à son entrée et le signal qu'il délivre. La phase du signal qu'il reçoit est $\varphi$e et la phase du signal qu'il délivre est $\varphi$e' et la différence entre les deux phases

$\Delta\varphi = \varphi$e-$\varphi$e' traduit le gradient de la force à mesurer. Cette différence de phase s'obtient en aval du bloc déphaseur 102 au niveau d'un bloc multiplieur 103 décrit ultérieurement.

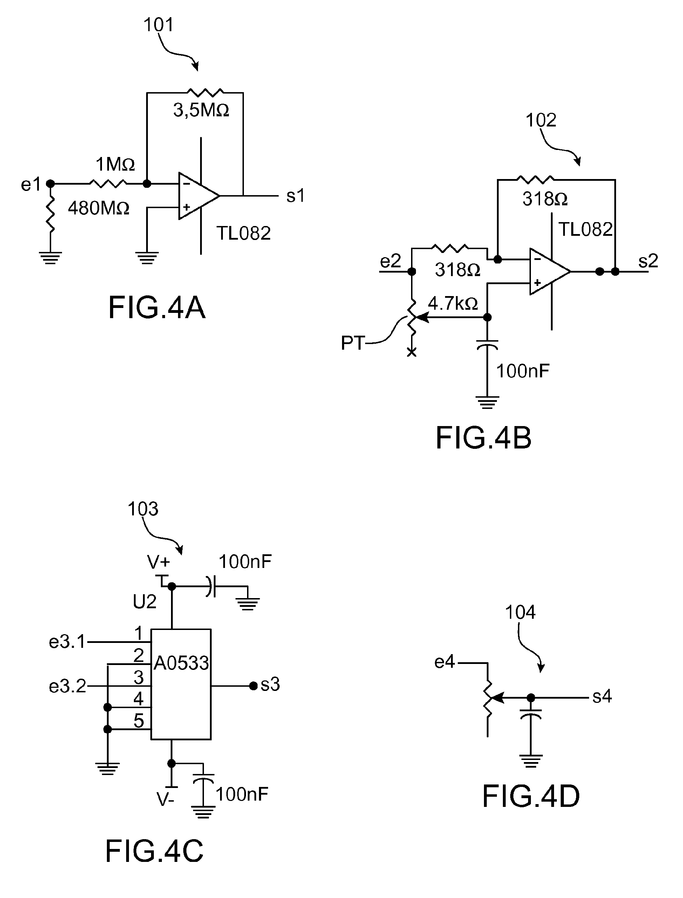

Cette fonction de déphasage permet d'effectuer des ajustements nécessaires lors de la calibration et d'apporter une correction supplémentaire dans le déphasage qui conduira à un ajustement de la raideur du corps d'épreuve 10. Cet ajustement est réalisé par un opérateur qui agit sur un potentiomètre PT monté en résistance variable et illustré sur la figure 4B.

Le bloc déphaseur 102 a sa sortie s2 reliée à une première entrée e3.1 du bloc multiplieur 103. Le bloc multiplieur 103 permet de multiplier le signal appliqué sur sa première entrée e3.1 à celui appliqué sur une seconde entrée e3.2, il délivre à sa sortie s3 un signal qui est toujours périodique. Le bloc multiplieur 103 reçoit donc d'une part sur sa première entrée e3.1 le signal délivré par le bloc déphaseur 102 et sur sa seconde entrée e3.2 un signal délivré par un bloc amplificateur 106 que l'on présentera ultérieurement. Le bloc multiplicateur 103 a sa sortie s3 reliée en entrée e4 d'un bloc filtre basse-bas 104 qui permet de limiter le spectre du signal qu'il reçoit à une plage de fréquences comprise entre 0 et sa fréquence de coupure. Le bloc filtre passe-bas 104 délivre en sortie s4 un signal en tension continue V dont l'amplitude traduit le déphasage $\Delta\varphi$ apporté par le bloc déphaseur 102 et qui est l'image de l'intensité de la force appliquée sur l'extrémité libre de la poutre effectrice 7. Le signe de ce signal en tension traduit la direction de la force appliquée à l'extrémité libre de la poutre effectrice.

Le bloc filtre passe-bas 104 a sa sortie s4 également reliée en entrée e5 d'un bloc oscillateur contrôlé en tension 105 dont le rôle est de fournir un signal périodique dont la fréquence fs est proportionnelle à la tension appliquée à son entrée et donc au déphasage $\Delta\varphi$ et dont la phase est $\varphi$s. Le signal à appliquer à l'élément d'excitation 5 aura cette phase $\varphi$s. La sortie s5 du bloc oscillateur contrôlé en tension 105 est reliée en entrée e6 d'un bloc amplificateur 106 qui réalise l'amplification du signal présent sur son entrée e6 d'un facteur déterminé.

La sortie s6 du bloc amplificateur 106 est reliée d'une part à la seconde entrée e3.2 du bloc multiplieur 103, ce qui ferme la boucle d'asservissement et d'autre part à une entrée e7 d'un bloc pont diviseur 107. Le bloc pont diviseur 107 permet de réduire l'amplitude du signal périodique présent à son entrée e7 d'un facteur prédéterminé. Cette amplitude est déterminée par les valeurs des composants, généralement de type résistance, qui composent ce bloc pont diviseur 107. La phase de ce signal est φs et sa fréquence fs.

Le bloc pont diviseur 107 a une sortie s7 reliée à l'élément d'excitation 5 situé sur la poutre d'excitation.

Lorsque Δφ est nul les fréquences fe et fs sont égales, ce n'est plus le cas dès que Δφ est non nul, c'est-à-dire que les fréquences fe et fs sont différentes et que l'on mesure une force appliquée à l'extrémité de la poutre effectrice.

Grâce à cette boucle d'asservissement, il est possible de garantir le fonctionnement du capteur de force autour d'une fréquence souhaitée et ce quelle que soit la force appliquée sur la poutre effectrice et quelle que soient les conditions environnementales, c'est-à-dire quelles que soient les variations de température, de pression, d'inclinaison, d'accélération, de vibration ....

Les figures 4A à 4G montrent des exemples conventionnels de circuits électroniques convenant pour chacun des blocs du circuit électronique 100. On ne reviendra pas en détails sur ces circuits électroniques car ils ne posent pas de problèmes à un homme du métier.

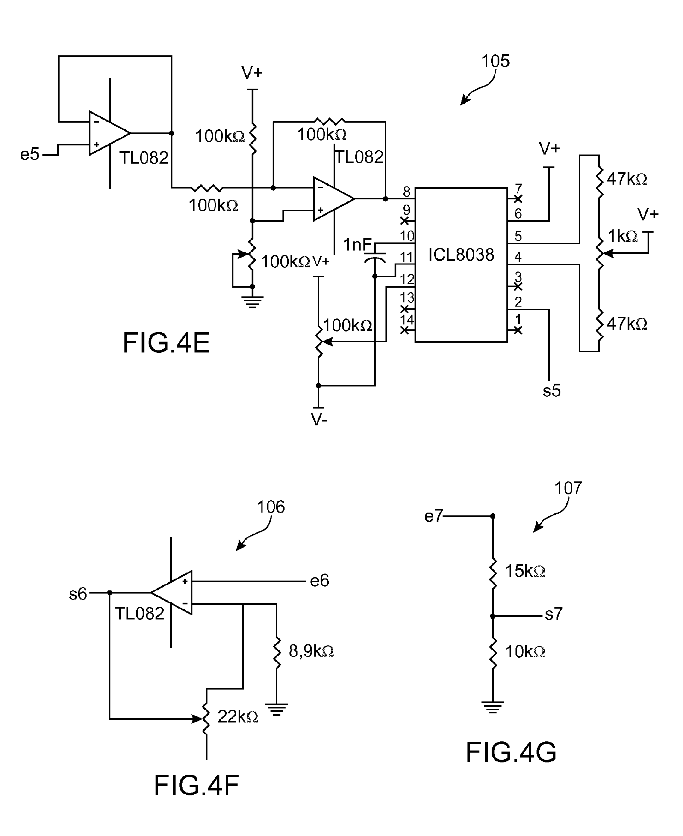

La figure 4A donne le détail du bloc d'adaptation d'impédance, la figure 4B donne le détail du bloc déphaseur, la figure 4C donne le détail du bloc multiplieur, la figure 4D donne le détail du bloc filtre passe-bas, la figure 4E donne le détail du bloc oscillateur contrôlé en tension, la figure 4F donne le détail du bloc amplificateur, la figure 4G donne le détail du bloc diviseur de tension. Sur ces dessins les composants passifs sont repérés par leurs valeurs et les composants actifs par leur code de référence.

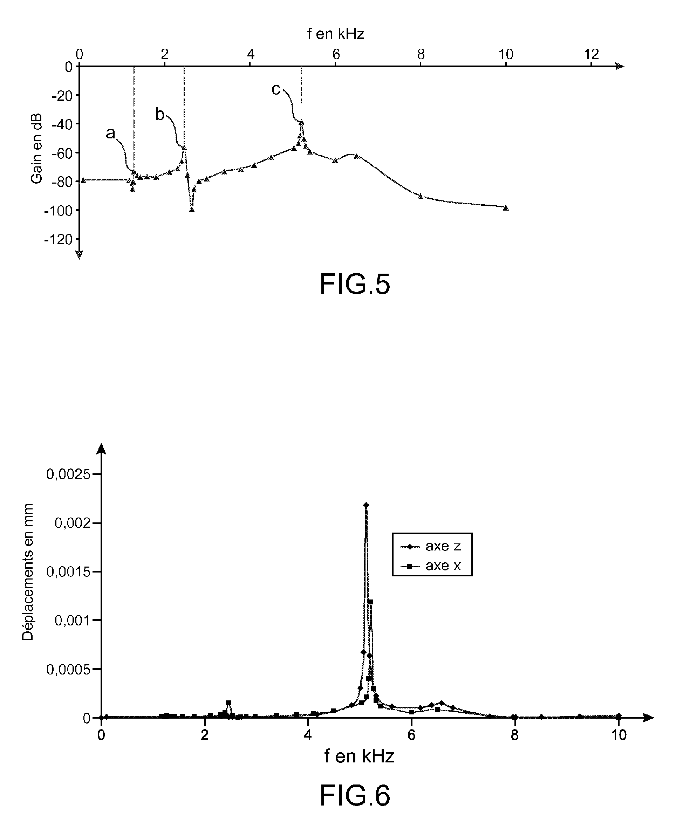

La figure 5 illustre la réponse spectrale du capteur de force selon l'invention. En abscisse on a représenté des valeurs de fréquences des signaux délivrés par l'élément de mesure 6, ce qui correspond à la fréquence de vibration de la poutre de mesure 4, et en ordonnée un gain en dB qui est le rapport entre l'amplitude du signal délivré par l'élément de mesure 6 et l'amplitude du signal appliqué à l'élément d'excitation 5. Dans les conditions expérimentales qui ont conduit au graphique de la figure 5, l'amplitude du signal en tension appliqué à l'élément d'excitation 5 est de 0,1 V.

Le choix de la fréquence de fonctionnement est important pour que l'on obtienne bien une déformation maximale de la poutre de mesure 4 au niveau de l'élément de mesure 6 mais aussi pour que les vibrations générées par la poutre d'excitation 3 épargnent la l'extrémité libre de la poutre effectrice.

Dans les conditions expérimentales on a défini trois points de fonctionnement caractéristiques référencés a, b et c et correspondant respectivement aux fréquences des signaux délivrés par l'élément de mesure, à savoir : 1,5, 2,65 et 5,54 KHz. A chaque point caractéristique de fonctionnement correspond une sensibilité donnée du capteur de force selon l'invention.

En passant d'un point de fonctionnement caractéristique à un autre, donc en changeant la pulsation du signal délivré par l'élément de mesure 6, on modifie la raideur du capteur de force sans à avoir à changer son corps d'épreuve puisque la raideur k est reliée à la pulsation de la manière suivante $\omega = \sqrt{\dfrac{k}{m}}$ avec m masse du corps d'épreuve. Des raideurs très différentes peuvent alors être obtenues.

Une autre manière d'ajuster la raideur du corps d'épreuve est de faire vibrer la poutre de mesure 4 à une fréquence qui n'est plus exactement une fréquence de résonance mais qui est très proche de celle correspondant à une des points de fonctionnement a, b ou c. On considère toujours bien sûr que le capteur de force est de type résonant. Dans ce cas la nouvelle raideur du corps d'épreuve est proche de celle obtenue lors du fonctionnement à un des points caractéristique a, b ou c. Cet ajustement s'obtient en commandant le déphasage apporté par le bloc déphaseur 102, via le potentiomètre PT, comme on l'a décrit précédemment.

La figure 6 illustre les déflexions obtenues à l'extrémité libre de la poutre effectrice lorsqu'on lui applique une force constante soit dirigée selon son axe principal, c'est-à-dire selon l'axe x, soit dirigée transversalement à son axe principal, c'est-à-dire selon l'axe z, alors que l'on fait varier la fréquence d'excitation de l'élément d'excitation 5. Les déplacements les plus importants supérieurs à 0, 5 micromètres sont obtenus pour des fréquences d'excitation proches du point de fonctionnement caractéristique c ou pour la fréquence d'excitation du point de fonctionnement caractéristique c.

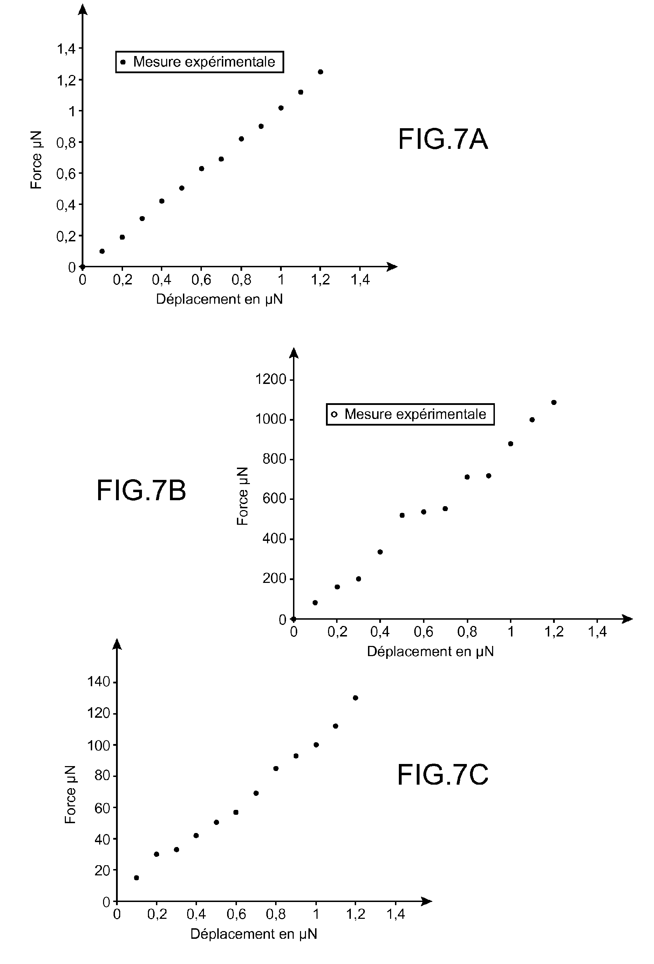

Les figures 7A, 7B, 7C sont des graphiques illustrant le déplacement de l'extrémité libre de la poutre effectrice lorsqu'on lui applique une force variable dirigée selon l'ase x. La figure 7A correspond au point de fonctionnement caractéristique c, la figure 7B au point de fonctionnement caractéristique b et la figure 7C au point de fonctionnement caractéristique a. On s'aperçoit bien que le point de fonctionnement caractéristique c donne au capteur de force la meilleure sensibilité, puisque les déplacements dans une gamme allant de 0,1 et 1,2 micromètres correspondent à des forces allant de 0,1 à 1,2 micro Newtons alors que pour le point de fonctionnement a, les déplacements dans la même gamme sont obtenus avec des forces allant de 80 à 150 micro Newtons. Ce point de fonctionnement caractéristique a correspond à la sensibilité la plus faible du capteur de force. Cela a pour avantage d'étendre la plage de mesure.

Un capteur de force selon l'invention peut être utilisé pour faire de la manipulation d'objets dont les dimensions sont de l'ordre ou inférieures a millimètre. Dans cette application l'interaction entre la poutre effectrice et l'objet à manipuler est cruciale de manière à permettre une manipulation précise, répétable et cyclique.

Un autre domaine d'application est la métrologie et la tribologie. Le capteur de force peut être intégré notamment dans un microscope en champ proche, un viscosimètre, un accéléromètre miniature, un indenteur. On rappelle qu'un indenteur est un appareil destiné à contrôler l'enfoncement d'un pénétrateur sous l'effet d'une charge. Un tel appareil est utilisé pour déterminer les propriétés mécaniques des matériaux en particulier la dureté et le module d'Young.

Un autre domaine d'application est le développement d'instrumentation sur mesure pour des applications spécifiques en physique, chimie, biologie, aérospatiale par exemple.

On comprendra que différents changements et modifications peuvent être apportés notamment au corps d'épreuve sans sortir du cadre de l'invention. L'espace entre la poutre intermédiaire et la première zone peut être plein au lieu d'être ajouré. Il en est de même pour l'espace entre la seconde poutre extrême et la première zone. La poutre effectrice, la poutre d'excitation et la poutre de mesure peuvent avoir des directions quelconques.

**DOCUMENTS CITES**

[1] "A MEMS micro force sensor for drosophila flight characterization" SUN et al., 2005 IEEE International conférence on robotics and biomimetics, pages 505 à 510;

[2] "Lateral nano-Newton force-sensing piezoresistive cantilever for microparticle handling" T. Chu DUC et al., Journal of micromechanics and microengineering 16 (2006), pages 102 à 106;

[3] "Direct vizualization of KirBac3.1 potassium channel gating by atomic force microscopy" Szymon JAROLAWSKI et al., Journal of Molecular Biology, 2007, 374 (2), pages 500 à 505;

[4] "3D manipulation using atomic force microscopy" Guangyong LI et al., IEEE International conférence on robotics and automation, 2003, Proceedings, ICRA'03, volume 3, 14-19 Sept. 2003, pages 3642 à 3647;

[5] "Design and performance characteristics of an integrated high-capacity DETF-based sensor" A. CHESHMEHDOOST et al., Sensors and actuators A52(1996) vol 5, pages 99 à 102;

[6] "Evaluation of a tuning fork type force transducer for use as a transfer standard" Toshyuki HAYASHI et al., Measurement 41 (2008), pages 941 à 949;

[7] "Design of a MEMS-based resonant force sensor for compilant, passive microgripping" Issam bait BAHADUR et al., IEEE International conference on mechatronics and automation, Niagara Falls, Juillet 2005, pages 77 à 82.

**Revendications**

1. Capteur de force résonant comportant un corps d'épreuve (10) formé d'une plaque monolithique comprenant une première zone (1') contribuant à délimiter un premier évidement (1), destinée, en fonctionnement, à être maintenue en position par rapport à un support (30), une seconde zone (2') contribuant à délimiter à la fois le premier évidement (1) et un second évidement (2), la seconde zone (2') étant reliée à la première zone (1'), **caractérisé en ce que** la plaque comporte :

une poutre de mesure (4) s'étendant en travers du premier évidement (1) ayant une première extrémité (40) encastrée à la première zone (1') et une seconde extrémité (41) reliée mécaniquement à la seconde zone (2'),
une poutre d'excitation (3) s'étendant au travers du second évidement (2) ayant ses deux extrémités encastrées à la seconde zone (2') étant équipée d'au moins un élément d'excitation (5),
une troisième zone (8) reliée à la première zone (1'),
une poutre effectrice (7) présentant une extrémité libre sur laquelle la force à mesurer va s'appliquer et une extrémité encastrée (9') à la troisième zone (8),
une quatrième zone (15) reliant l'extrémité encastrée (9') de la poutre effectrice (7) à la seconde extrémité (41) de la poutre de mesure (4), le capteur étant configuré de manière à ce que lorsque le corps d'épreuve (10) vibre par activation de l'élément d'excitation (5), en l'absence de force appliquée sur l'extrémité libre (9) de la poutre effectrice (7), la poutre de mesure (4) possède au moins un ventre de vibration et est équipée d'au moins un élément de mesure (6) au niveau de ce ventre, et l'extrémité libre (9) de la poutre effectrice (7) est située sensiblement sur un noeud de vibration de la poutre effectrice (7), et sans activation de l'élément d'excitation (5), en présence d'une force appliquée à l'extrémité libre (9) de la poutre effectrice (7), l'élément de mesure (6) est situé à un endroit de déformation maximale de la poutre de mesure (4).

2. Capteur de force résonant selon la revendication 1, dans lequel la première zone (1'), la seconde zone (2') et la troisième zone (8) sont pleines.

3. Capteur de force résonant selon l'unes des revendications 1 ou 2, dans lequel la seconde zone (2') et la troisième zone (8) sont reliées chacune à la première zone (1') par une liaison mécanique (20) ayant un comportement d'encastrement lorsque la première zone (1') est maintenue en position par rapport au support.

4. Capteur de force selon l'une des revendications 1 à 3, dans lequel la seconde extrémité (41) de la poutre de mesure (4) est reliée mécaniquement à la seconde zone (2') par une liaison pivot.

5. Capteur de force selon l'une des revendications précédentes, dans lequel la quatrième zone (15) est moins massive que la première, la seconde et la troisième zone.

6. Capteur de force selon la revendication 5, dans lequel la quatrième zone (15) est formée d'une succession de poutres reliées les unes aux autres, dont une première extrême (15.1) est reliée à l'extrémité encastrée (9') de la poutre effectrice (7) et une seconde extrême (15.3) est reliée à la seconde extrémité (41) de la poutre de mesure (4).

7. Capteur selon la revendication 6, dans lequel la succession comporte une poutre intermédiaire (15.2) entre les deux poutres extrêmes, une extrémité de la poutre intermédiaire étant reliée à une extrémité de la poutre d'excitation (3) par une première poutre supplémentaire (16.1) et l'autre extrémité de la poutre intermédiaire (15.2) étant reliée à la seconde zone (2') par l'intermédiaire d'une seconde poutre supplémentaire (16.2).

8. Capteur de force selon l'une des revendications précédentes, dans lequel la plaque est en métal tel que l'aluminium.

9. Capteur de force selon l'une des revendications précédentes, dans lequel la plaque a une épaisseur de l'ordre du millimètre, une plus grande longueur et une plus grande largeur de l'ordre de la vingtaine de millimètres.

10. Capteur de force selon l'une des revendications précédentes, dans lequel lorsque la poutre d'excitation (3) est équipée de deux éléments d'excitation (5), ils sont situés en vis-à-vis, sur des faces opposées de la poutre d'excitation (3).

11. Capteur de force selon l'une des revendications précédentes, comportant en outre un circuit électronique de commande et de traitement (100) destiné à recevoir un signal délivré par l'élément de mesure (6), à fournir un signal à l'élément d'excitation (5) et ayant une sortie destinée à fournir un signal traduisant l'intensité de la force appliquée à l'extrémité libre de la poutre effectrice, ce circuit électronique (100) comportant une boucle d'asservissement (103-106) pour ajuster le signal fourni à l'élément d'excitation (5) de manière qu'il ait une fréquence asservie en fonction de la différence entre la phase du signal délivré par l'élément de mesure et la phase du signal fourni à l'élément d'excitation quelle que soit la force appliquée à l'extrémité libre (9) de la poutre effectrice (7).

12. Capteur de force selon la revendication 11, dans lequel la boucle d'asservissement comporte un bloc multiplieur (103) ayant une première entrée (e3.1) recevant le signal délivré par l'élément de mesure (6) ayant subi éventuellement un déphasage et une seconde entrée (e3.2) recevant un signal traduisant le signal à appliquer à l'élément d'excitation (5), et une sortie (s3) reliée à une entrée (e4) d'un bloc filtre passe-bas (104), le bloc filtre passe-bas (14) ayant une sortie (s4) qui est d'une part la sortie destinée à fournir un signal traduisant l'intensité de la force appliquée à l'extrémité libre de la poutre effectrice, et qui d'autre part est reliée à une entrée (e5) d'un bloc oscillateur contrôlé en tension (105), le bloc oscillateur contrôlé en tension (105) ayant une sortie (s5) reliée d'une part à la seconde entrée (e3.2) du bloc multiplieur (103) et d'autre part à l'élément d'excitation (5).

13. Capteur de force selon la revendication 12, dans lequel la boucle d'asservissement comporte en outre un bloc amplificateur (106), la sortie (s5) du bloc oscillateur contrôlé en tension (105) étant reliée à une entrée (e6) du bloc amplificateur (106), le bloc amplificateur (106) ayant une sortie (s6) reliée à la seconde entrée (e3.2) du bloc multiplieur (103) et d'autre part à l'élément d'excitation (5).

14. Capteur de force selon la revendication 13, dans lequel le circuit électronique de commande et de traitement (100) comporte en outre un bloc diviseur de tension (107), ce bloc diviseur de tension (107) ayant une entrée (e7) reliée à la sortie (s6) du bloc amplificateur (106), et une sortie (s7) reliée à l'élément d'excitation (5).

15. Capteur de force selon l'une des revendications 12 à 14, dans lequel le circuit électronique de commande et de traitement (100) comporte en outre un bloc déphaseur (102) ayant une entrée (e2) reliée à l'élément de mesure (6) et une sortie (s2) reliée à la première entrée (e3.1) du bloc multiplieur (103).

16. Capteur de force selon la revendication 15, dans lequel le circuit électronique de commande et de traitement (100) comporte en outre un bloc d'adaptation d'impédance (101) ayant une entrée (e1) reliée à l'élément de mesure (6) et une sortie (s1) reliée à l'entrée (e2) du bloc déphaseur (102).

**Patentansprüche**

1. Resonanter Kraftsensor, umfassend einen Prüfkörper (10), der aus einer monolithischen Platte gebildet ist, umfassend eine erste Zone (1'), die zur Begrenzung einer ersten Aussparung (1) beiträgt, welche in Betrieb dazu ausgelegt ist, in Position relativ zu einem Träger (30) gehalten zu werden, eine zweite Zone (2'), die dazu beiträgt, gleichzeitig die erste Aussparung (1) und eine zweite Aussparung (2) zu begrenzen, wobei die zweite Zone (2') mit der ersten Zone (1') verbunden ist, **dadurch gekennzeichnet, dass** die Platte umfasst:

einen Messbalken (4), der sich durch die erste Aussparung (1) hindurch erstreckt und ein erstes Ende (40) hat, das in die erste Zone (1') eingespannt ist, sowie ein zweites Ende (41), das mechanisch mit der zweiten Zone (2') verbunden ist,

einen Anregungsbalken (3), der sich durch die zweite Aussparung (2) hindurch erstreckt, und dessen zwei Enden in die zweite Zone (2') eingespannt sind, die mit wenigstens einem Anregungselement (5) ausgestattet ist,

eine dritte Zone (8), die mit der ersten Zone (1') verbunden ist,

einen Effektorbalken (7), der ein freies Ende aufweist, an dem die zu messende Kraft angreifen soll, sowie ein in die dritte Zone (8) eingespanntes Ende (9'),

eine vierte Zone (15), die das eingespannte Ende (9') des Effektorbalkens (7) mit dem zweiten Ende (41) des Messbalkens (4) verbindet, wobei der Sensor dazu ausgelegt ist, dass dann, wenn der Prüfkörper (10) durch Aktivierung des Anregungselements (5) schwingt, in Abwesenheit einer am freien Ende (9) des Effektorbalkens (7) angreifenden Kraft der Messbalken (4) wenigstens einen Schwingungsbauch besitzt und mit wenigstens einem Messelement (6) im Bereich dieses Bauchs ausgestattet ist, und das freie Ende (9) des Effektorbalkens (7) im Wesentlichen auf einem Schwingungsknoten des Effektorbalkens (7) angeordnet ist, und dass ohne Aktivierung des Anregungselements (5) in Anwesenheit einer Kraft, die am freien Ende (9) des Effektorbalkens (7) angreift, das Messelement (6) an einer Stelle maximaler Verformung des Messbalkens (4) angeordnet ist.

2. Resonanter Kraftsensor nach Anspruch 1, bei dem die erste Zone (1'), die zweite Zone (2') und die dritte Zone (8) gefüllt sind.

3. Resonanter Kraftsensor nach einem der Ansprüche 1 oder 2, bei dem die zweite Zone (2') und die dritte Zone (8) jeweils mit der ersten Zone (1') durch eine mechanische Verbindung (20) verbunden sind, die ein Einspannverhalten hat, wenn die erste Zone (1') in Position relativ zum Träger gehalten wird.

4. Kraftsensor nach einem der Ansprüche 1 bis 3, bei dem das zweite Ende (41) des Messbalkens (4) mechanisch mit der zweiten Zone (2') durch eine Gelenkverbindung verbunden ist.

5. Kraftsensor nach einem der vorherigen Ansprüche, bei dem die vierte Zone (15) weniger massiv als die erste, die zweite und die dritte Zone ist.

6. Kraftsensor nach Anspruch 5, bei dem die vierte Zone (15) durch eine Folge von miteinander verbundenen Balken gebildet ist, von denen ein erstes äußeres Ende (15.1) mit dem eingespannten Ende (9') des Effektorbalkens (7) verbunden ist und ein zweites äußeres Ende (15.3) mit dem zweiten Ende (41) des Messbalkens (4) verbunden ist.

7. Sensor nach Anspruch 6, bei dem die Folge einen Zwischenbalken (15.2) zwischen den zwei äußeren Endbalken umfasst, wobei ein Ende des Zwischenbalkens mit einem Ende des Anregungsbalkens (3) durch einen ersten Zusatzbalken (16.1) verbunden ist, und das andere Ende des Zwischenbalkens (15.2) mit der zweiten Zone (2') mittels eines zweiten Zusatzbalkens (16.2) verbunden ist.

8. Kraftsensor nach einem der vorhergehenden Ansprüche, bei dem die Platte aus Metall wie zum Beispiel Aluminium ist.

9. Kraftsensor nach einem der vorhergehenden Ansprüche, bei dem die Platte eine Dicke in der Größenordnung von einem Millimeter hat, eine größere Länge sowie eine größere Breite in der Größenordnung von ca. 20 Millimetern.

10. Kraftsensor nach einem der vorhergehenden Ansprüche, bei dem dann, wenn der Anregungsbalken (3) mit zwei Anregungselementen (5) ausgestattet ist, diese einander gegenüber auf entgegengesetzten Flächen des Anregungsbalkens (3) angeordnet sind.

11. Kraftsensor nach einem der vorhergehenden Ansprüche, ferner umfassend eine elektronische Steuer- und Verarbeitungsschaltung (100), die dazu ausgelegt ist, ein von dem Messelement (6) geliefertes Signal zu empfangen und ein Signal an das Anregungselement (5) zu liefern, und die einen Ausgang hat, welcher dazu ausgelegt ist, ein Signal zu liefern, das die Intensität der am freien Ende des Effektorbalkens angreifenden Kraft wiedergibt, wobei diese elektronische Schaltung (100) eine Regelschleife (103-106) zum Anpassen des an das Anregungselement (5) gelieferten Signals derart umfasst, dass es eine Frequenz hat, die als Funktion der Differenz zwischen der Phase des vom Messelement gelieferten Signals und der Phase des an das Anregungselement gelieferten Signals geregelt ist, unabhängig von der am freien Ende (9) des Effektorbalkens (7) angreifenden Kraft.

12. Kraftsensor nach Anspruch 11, bei dem die Regelschleife einen Multiplizierblock (103) umfasst, mit einem ersten Eingang (e3.1), der das vom Messelement (6) gelieferte Signal empfängt, welches gegebenenfalls eine Phasenverschiebung erfahren hat, und einem zweiten Eingang (e3.2), der ein Signal empfängt, welches das an das Anregungselement (5) anzulegende Signal wiedergibt, sowie einem Ausgang (s3), der mit einem Eingang (e4) eines Tiefpassfilterblocks (104) verbunden ist, wobei der Tiefpassfilterblock (14) einen Ausgang (s4) hat, der einerseits der Ausgang ist, welcher dazu ausgelegt ist ein Signal zu liefern, das die Intensität der am freien Ende des Effektorbalkens angreifenden Kraft wiedergibt, und der andererseits mit einem Eingang (e5) eines spannungsgesteuerten Oszillatorblocks (105) verbunden ist, wobei der spannungsgesteuerte Oszillatorblock (105) einen Ausgang (s5) hat, der einerseits mit dem zweiten Eingang (e3.2) des Multiplizierblocks (103) und andererseits mit dem Anregungselement (5) verbunden ist.

13. Kraftsensor nach Anspruch 12, bei dem die Regelschleife ferner einen Verstärkerblock (106) umfasst, wobei der Ausgang (s5) des spannungsgesteuerten Oszillatorblocks (105) mit einem Eingang (e6) des Verstärkerblocks (106) verbunden ist, wobei der Verstärkerblock (106) einen Ausgang (s6) hat, der mit dem zweiten Eingang (e3.2) des Multiplizierblocks (103) und andererseits mit dem Anregungselement (5) verbunden ist.

14. Kraftsensor nach Anspruch 13, bei dem die elektronische Steuer- und Verarbeitungsschaltung (100) ferner einen Spannungsteilerblock (107) umfasst, wobei dieser Spannungsteilerblock (107) einen Eingang (e7) hat, der mit dem Ausgang (s6) des Verstärkerblocks (106) verbunden ist, sowie einen Ausgang (s7), der mit dem Anregungselement (5) verbunden ist.

15. Kraftsensor nach einem der Ansprüche 12 bis 14, bei dem die elektronische Steuer- und Verarbeitungsschaltung (100) ferner einen Phasenverschiebungsblock (102) umfasst, mit einem Eingang (e2), der mit dem Messelement (6) verbunden ist, und einem Ausgang (s2), der mit dem ersten Eingang (e3.1) des Multiplizierblocks (103) verbunden ist.

16. Kraftsensor nach Anspruch 15, bei dem die elektronische Steuer- und Verarbeitungsschaltung (100) ferner einen Impedanzanpassungsblock (101) umfasst, mit einem Eingang (e1), der mit dem Messelement (6) verbunden ist, und einem Ausgang (s1), der mit dem Eingang (e2) des Phasenverschiebungsblocks (102) verbunden ist.

**Claims**

1. Resonating force sensor comprising a proof body (10) formed of a one-piece plate including a first area (1') contributing to delimit a first recess (1), intended, in operation, to be held in position with respect to a mounting (30), a second area (2') contributing to delimit both the first recess (1) and a second recess (2), the second area (2') being connected to the first area (1'), **characterised in that** the plate comprises:

   a measuring beam (4) extending across the first recess (1) having a first end (40) embedded in the first area (1') and a second end (41) mechanically connected to the second area (2'), an excitation beam (3) extending across the second recess (2) having its two embedded ends in the second area (2') being provided with at least one excitation element (5), a third area (8) connected to the first area (1'), an effector beam (7) having a free end on which the force to be measured is going to be applied and an end embedded (9') in the third area (8), a fourth area (15) connecting the embedded end (9') of the effector beam (7) to the second end (41) of the measuring beam (4), the sensor being configured so that when the proof body (10) vibrates through activation of the excitation element (5), in the absence of force applied to the free end (9) of the effector beam (7), the measuring beam (4) has at least one vibration antinode and is equipped with at least one measuring element (6) at the level of said antinode, and the free end (9) of the effector beam (7) is situated substantially on a vibration node of the effector beam (7), and without activation of the excitation element (5), in the presence of a force applied to the free end (9) of the effector beam (7), the measuring element (6) is situated at a point of maximal deformation of the measuring beam (4).

2. Resonating force sensor according to claim 1, in which the first area (1'), the second area (2') and the third area (8) are solid.

3. Resonating force sensor according to one of claims 1 or 2, in which the second area (2') and the third area (8) are each connected to the first area (1') by a mechanical connection (20) having an embedded behaviour when the first area (1') is held in position with respect to the mounting.

4. Force sensor according to one of claims 1 to 3, in which the second end (41) of the measuring beam (4) is mechanically connected to the second area (2') by a pivot connection.

5. Force sensor according to one of the preceding claims, in which the fourth area (15) is less massive than the first, the second and the third areas.

6. Force sensor according to claim 5, in which the fourth area (15) is formed of a succession of beams connected to each other, a first extreme (15.1) of which is connected to the embedded end (9') of the effector beam (7) and a second extreme (15.3) is connected to the second end (41) of the measuring beam (4).

7. Sensor according to claim 6, in which the succession comprises an intermediate beam (15.2) between the two extreme beams, an end of the intermediate beam being connected to an end of the excitation beam (3) by a first additional beam (16.1) and the other end of the intermediate beam (15.2) being connected to the second area (2') through the intermediary of a second additional beam (16.2).

8. Force sensor according to one of the preceding claims, in which the plate is made of metal such as aluminium.

9. Force sensor according to one of the preceding claims, in which the plate has a thickness of the order of a millimetre, a greater length and a greater width of the order of twenty or so millimetres.

10. Force sensor according to one of the preceding claims, in which when the excitation beam (3) is equipped with two excitation elements (5), they are situated opposite each other, on opposite faces of the excitation beam (3).

11. Force sensor according to one of the preceding claims, comprising moreover an electronic command and processing circuit (100) intended to receive a signal delivered by the measuring element (6), to supply a signal to the excitation element (5) and having an output intended to supply a signal expressing the intensity of the force applied to the free end of the effector beam, said electronic circuit (100) comprising a control loop (103-106) to adjust the signal supplied to the excitation element (5) so that it has a frequency automatically controlled as a function of the difference between the phase of the signal delivered by the measuring element and the phase of the signal supplied to the excitation element, whatever the force applied to the free end (9) of the effector beam (7).

12. Force sensor according to claim 11, in which the automatic control loop comprises a multiplier unit (103) having a first input (e3.1) receiving the signal delivered by the measuring element (6) having optionally undergone a phase shifting and a second input (e3.2) receiving a signal expressing the signal to apply to the excitation element (5), and an output (s3) connected to an input (e4) of a low pass filter unit (104), the low pass filter unit (14) having an output (s4) which is on the one hand the output intended to supply a signal expressing the intensity of the force applied to the free end of the effector beam, and which on the other hand is connected to an input (e5) of a voltage controlled oscillator unit (105), the voltage controlled oscillator unit (105) having an output (s5) connected on the one hand to the second input (e3.2) of the multiplier unit (103) and on the other hand to the excitation element (5).

13. Force sensor according to claim 12, in which the control loop moreover comprises an amplifier unit (106), the output (s5) of the voltage controlled oscillator unit (105) being connected to an input (e6) of the amplifier unit (106), the amplifier unit (106) having an output (s6) connected to the second input (e3.2) of the multiplier unit (103) and on the other hand to the excitation element (5).

14. Force sensor according to claim 13, in which the electronic command and processing circuit (100) moreover comprises a voltage divider unit (107), said voltage divider unit (107) having an input (e7) connected to the output (s6) of the amplifier unit (106), and an output (s7) connected to the excitation element (5).

15. Force sensor according to one of claims 12 to 14, in which the electronic command and processing circuit (100) moreover comprises a phase shifter unit (102) having an input (e2) connected to the measuring element (6) and an output (s2) connected to the first input (e3.1) of the multiplier unit (103).

16. Force sensor according to claim 15, in which the electronic command and processing circuit (100) moreover comprises an impedance adaptation unit (101) having an input (e1) connected to the measuring element (6) and an output (s1) connected to the input (e2) of the phase shifter unit (102).

FIG.1A

F    5.1

10.1

11.1

4.1

2.1    3.1

1.1

x

$x_m$

$\dfrac{x_m}{\sqrt{2}}$

FIG.1B

$\Delta\omega$

0    ω

ωk

$x_m$

$\dfrac{x_m}{\sqrt{2}}$

FIG.1C

$\Delta\omega$

0    ω

ωk'

FIG.2

EP 2 504 676 B1

101

100

102

103

104

e1 → Adaptation d'impédance (fe, φe) / s1 / e2 → Déphaseur (fe, φe') / s2 / e3.1 → ⊗ s3 / e3 → Filtre passe bas / s4 → V

e3.2

107

106

105

Diviseur de tension / e7 / s7 (fs, φs) s6 → Ampli-ficateur / e6 / s5 → Oscillateur contrôlé en tension (VCO) / e5

10

6

7

5

FIG.3

101

3,5MΩ

1MΩ

e1

480MΩ

s1

TL082

**FIG.4A**

102

318Ω

e2    318Ω

TL082

4.7kΩ

s2

PT

100nF

**FIG.4B**

103

V+    100nF

U2

e3.1    1

2    A0533

e3.2    3

4    s3

5

V-    100nF

**FIG.4C**

104

e4

s4

100nF

**FIG.4D**

FIG.4E

FIG.4F

FIG.4G

FIG.5

FIG.6

FIG.7A

FIG.7B

FIG.7C

## RÉFÉRENCES CITÉES DANS LA DESCRIPTION

**Documents brevets cités dans la description**

- US 6450032 B

**Littérature non-brevet citée dans la description**

- **SUN et al.** A MEMS micro force sensor for drosophila flight characterization. *IEEE International conférence on robotics and biomimetics,* 2005, 505-510
- **T. CHU DUC et al.** Lateral nano-Newton force-sensing piezoresistive cantilever for microparticle handling. *Journal of micromechanics and microengineering,* 2006, vol. 16, 102-106
- **SZYMON JAROLAWSKI et al.** Direct vizualization of KirBac3.1 potassium channel gating by atomic force microscopy. *Journal of Molecular Biology,* 2007, vol. 374 (2), 500-505
- **GUANGYONG LI et al.** 3D manipulation using atomic force microscopy. *IEEE International conférence on robotics and automation,* 14 Septembre 2003, vol. 3, 3642-3647
- **A. CHESHMEHDOOST et al.** Design and performance characteristics of an integrated high-capacity DETF-based sensor. *Sensors and actuators A52,* 1996, vol. 5, 99-102
- **TOSHYUKI HAYASHI et al.** Evaluation of a tuning fork type force transducer for use as a transfer standard. *Measurement,* 2008, vol. 41, 941-949
- **ISSAM BAIT BAHADUR et al.** Design of a MEMS-based resonant force sensor for compilant, passive microgripping. *IEEE International conférence on mechatronics and automation,* Juillet 2005, 77-82